# EUROPEAN PATENT APPLICATION

(11) **EP 4 163 227 A1**
(43) Date of publication of application: **12.04.2023**
(21) Application number: 22200833.6
(22) Date of filing: 11.10.2022
(51) Int. Cl.: B65F 1/00, B65F 1/14, B65F 1/16

(54) **BIN SHELTER**

(30) Priority: 11.10.2021 FI 20216050
(71) Applicant: ENERCET OY, 40630 Jyväskylä (FI)
(72) Inventor: HYYTINEN, Pasi, 29631 Arroyo De La Miel (Malaga) (ES)
(74) Representative: Kespat Oy

(57) **Abstract**

The invention relates to a bin shelter, which is meant for one or more waste bins (10). The bin shelter includes a bottom (11) and side walls (12, 13) connected to the bottom (11), between which a rear wall (14) and an at least partly openable front wall (15) are arranged, and an openable cover (16). The cover (16) is fitted with compaction equipment (17) for compacting waste contained in the waste bin (10).

## Description

The invention is related to a bin shelter, which is meant for one or more waste bins and includes a bottom and side walls connected to the bottom, between which a rear wall and an at least partly openable front wall are arranged, and an openable cover.

In addition to large building-like bin shelters, smaller constructions also exist. One known construction is equipped with a bottom, walls and a cover. The front wall is composed of two doors allowing the waste bin to be pushed in to the bin shelter. When putting waste into waste bins, the cover is opened. The bin shelter is small in size and thus easy to locate in a suitable place. In addition, the waste bin is completely protected, which keeps the environment clean and prevents birds and rodents, etc. from entering the bin shelter.

The object of the invention is to provide a novel bin shelter, which is simple but can fit in more waste than before. The characteristic features of the bin shelter according to this invention become apparent from the appended claims. The bin shelter according to the invention has a surprising function, with which it is possible to increase the amount of waste that the waste bin can hold.

The invention is described below in detail with reference to the accompanying drawings that illustrate some of the embodiments of the invention, in which
- Figure 1: is a diagonal front view of a bin shelter according to the invention,
- Figure 2: is a diagonal bottom view of the bin shelter of Figure 1 with the front wall removed,

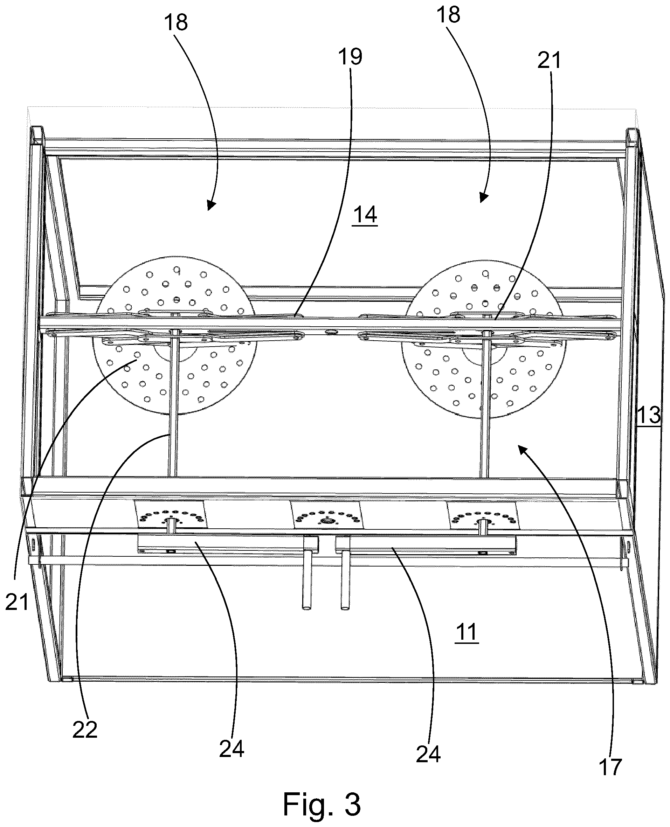

- Figure 3: is a top view of the bin shelter of Figure 1 with additionally the cover partly removed,
- Figure 4: is a diagonal front view of a second embodiment of the bin shelter according to the invention with the front wall removed, together with waste bins to be fitted in the bin shelter,
- Figure 5: is a diagonal bottom view of the bin shelter of Figure 4 with the front wall removed,
- Figure 6: is a diagonal top view of a third embodiment of the bin shelter according to the invention with the front wall and the cover partly removed,
- Figure 7a: illustrates a bin shelter according to the invention locked in the compaction position,
- Figure 7b: illustrates the bin shelter of Figure 7a with the cover opened,
- Figure 8: illustrates the bin shelter of Figure 7a with the cover and doors opened.

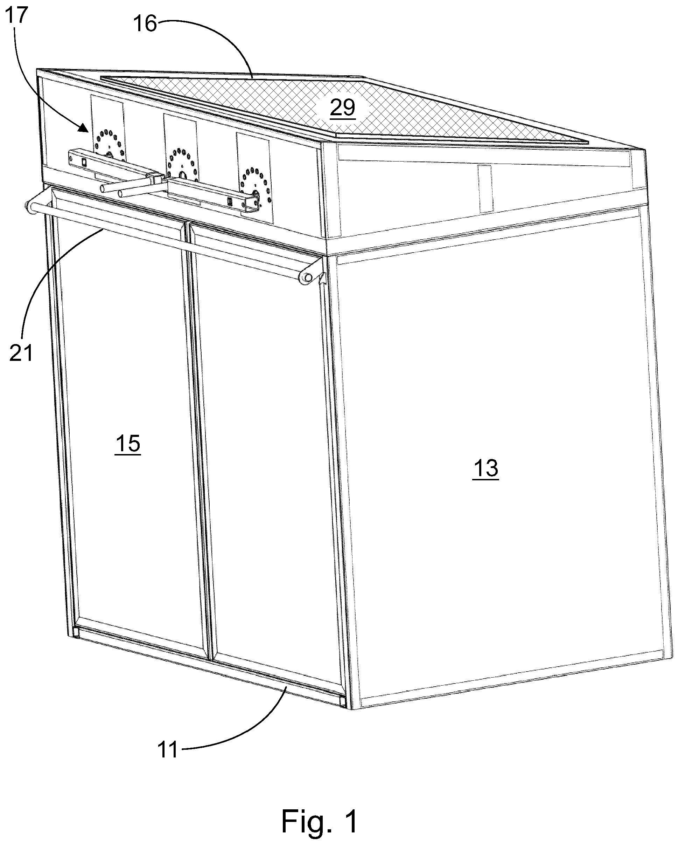

Figure 1 shows a bin shelter, which is meant for one or more waste bins 10. The bin shelter includes a bottom 11 and side walls 12 and 13 connected to the bottom 11. A rear wall 14 and an at least partly openable front wall 15 are arranged between the side walls. The bin shelter also includes an openable cover 16. In the invention, the cover 16 is fitted with compaction equipment 17 for compacting waste contained in the waste bin 10. In this way, the waste bin can be made to hold more waste than before and the emptying interval of the waste bin then becomes longer than before. On the other hand, one waste bin can hold more waste than before, which means that the number of waste bins can be reduced.

More precisely, compaction equipment 17 includes one, two or three compactors 18. The compaction area can then be maximised and, on the other hand, compaction equipment can be modified for different waste bins. For example, each compactor 18 has a waste bin 10 of its own or there are two compactors 18 per one waste bin 10. The first embodiment has two compactors, which can also be operated independently of each other. This is advantageous when two waste bins are placed side by side in a bin shelter. The cover 16 also has a reservation for a third compactor.

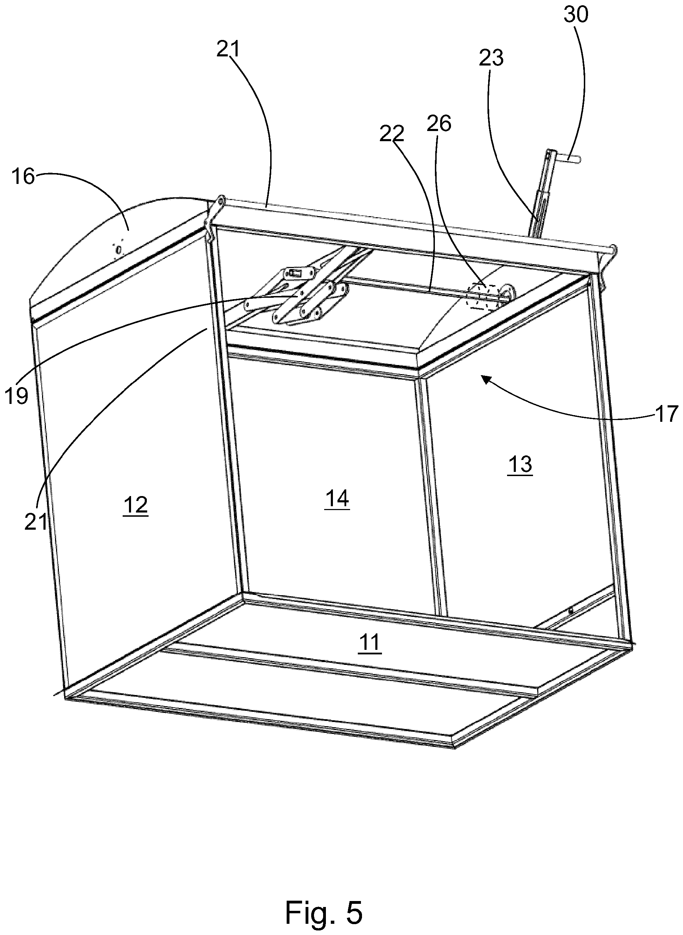

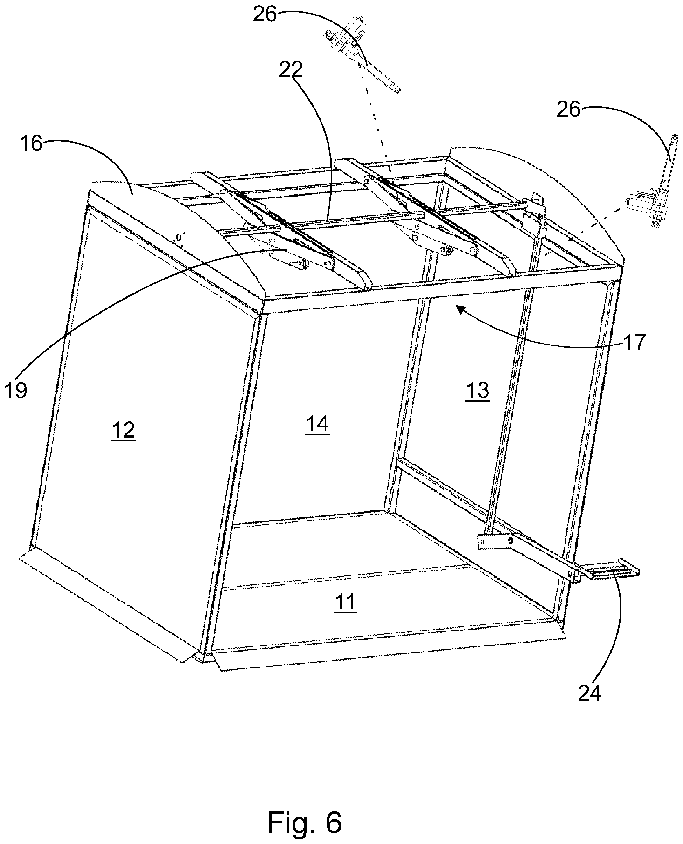

In the embodiments shown, the compactor 18 is a manual scissors mechanism 19. The scissors mechanism fits in a small space, yet a long compaction movement is achieved with it. Manual operation can be implemented in a simple way and excessive forces are avoided. At the same time, anyone can take a waste compactor in use without any electrical work. However, the compactor 18 can be a driven SK scissors mechanism 19. Thus, with an electric drive, for example, scissors mechanisms can be operated easily by pressing a button. An electric drive 26 can be implemented with a motor arranged on the drive shaft 22, according to Figure 5. In Figure 6, the drive 26 is implemented with a spindle motor, which can replace an operation pedal 24 or be used to directly operate the scissors mechanism 19. In Figure 6, spindle motors are shown separated from other structures.

One or more electric drives can be connected to the mains. Wirings and operating and protective switches are not shown. Advantageously, the drive 26 is connected to a combination of a battery 28 and a solar panel 29. This means that the bin shelter is self-powered. In Figure 1, the solar panel 29 is fitted in the cover 16. Solar energy collection is efficient in the cover and the solar panel is protected. A wall-mounted solar panel could be damaged when hit by a waste bin, for example. The battery can also be recharged with mains power supply. In Figure 1, the battery 28 is elongated and it is placed on the bottom 11 of the bin shelter. Thus, the battery contributes to the sturdiness of the bin shelter. In addition, the battery is located between the wheels of the waste bin. Another advantageous place for the battery is in the area of the connection point between the floor and the rear wall. If necessary, a closable casing is made for the battery. In this way, the battery is kept intact and clean. At the same time, a battery theft becomes notably more difficult. Battery power can also be used for illumination.

Although the scissors mechanism is light, it partly increases the weight of the cover. Therefore, one or more relief springs 20 are connected to the cover 16. The relief spring helps to open the cover and, on the other hand, keeps the opened cover open. The relief spring is preferably a gas spring. The cover is kept closed, however, regardless of relief springs. Nevertheless, the cover 16 has a locking element 21, which keeps the cover closed while operating the compactors. Thus, the user can concentrate on operating the compactor.

In the first embodiment, the compactor 18 includes a drive shaft 22, which extends in the depth direction of the bin shelter. Then each compactor has a drive shaft of its own, which allows the use of compactors independently of each other. In the two other embodiments, the compactor 18 includes a drive shaft 22 that extends in the lateral direction of the bin shelter. In this case, the drive shaft 22 is shared by each compactor 18.

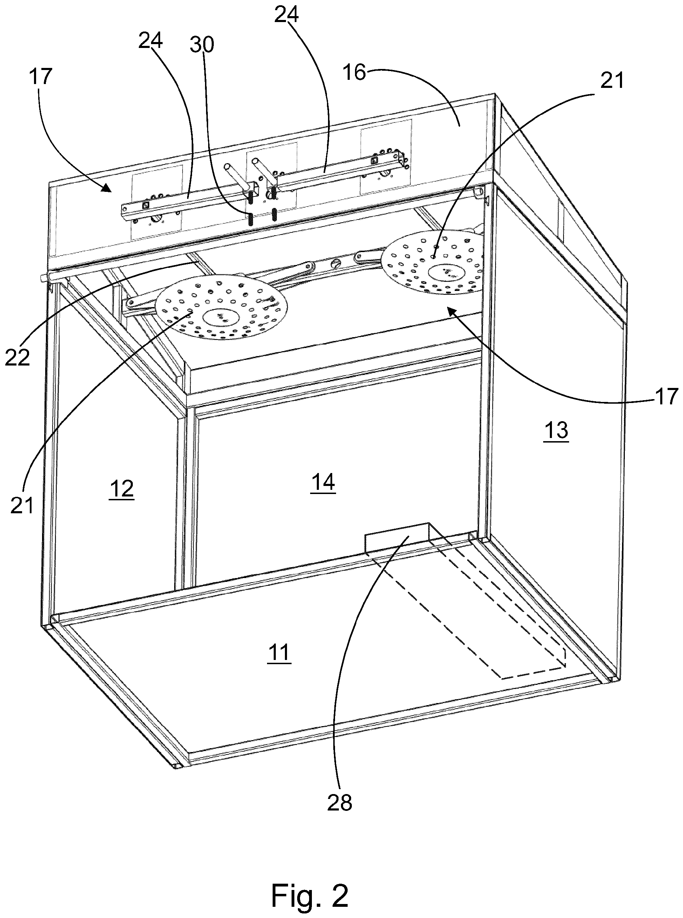

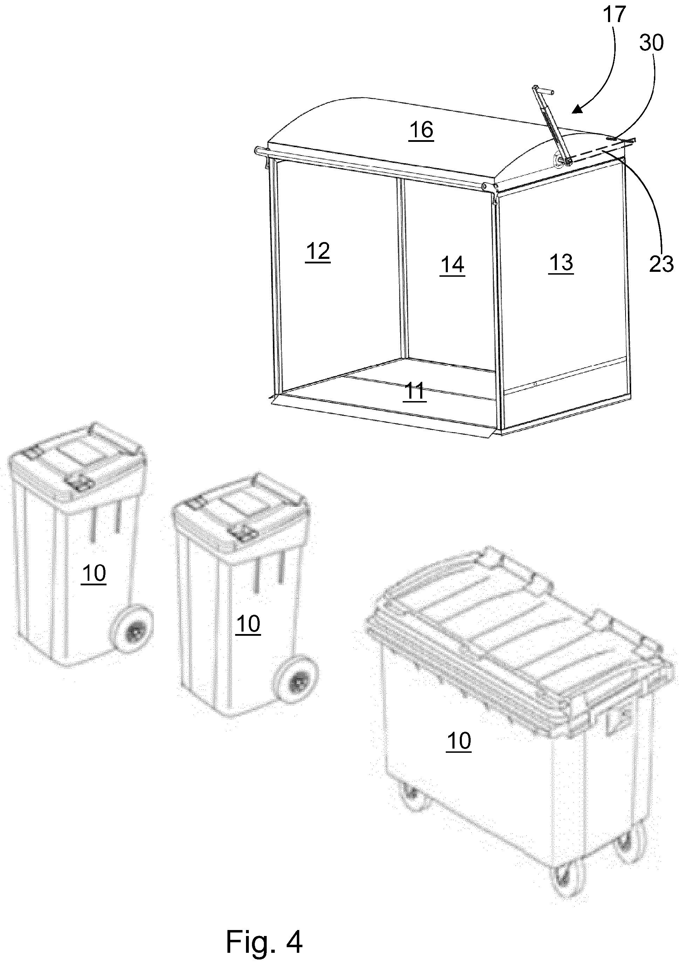

In the two first embodiments, arranged as an extension to the drive shaft 22, there is a crank 23, fitted on the outside of the cover 16. The compactor is then operated by turning the crank. Advantageously, the crank arm is telescopic, which allows elongation of the moment arm (Figure 6a). The maximum compaction length is achieved by rotating the drive shaft approximately half a turn. The crank 23 includes a handle 30, which is arranged to turn essentially 90 or 180 degrees relative to the crank. Thus, the handle can be folded to a protected position between uses. In other words, the bin shelter is as much as possible free of protruding parts avoiding in this way damage to the crank and personal injuries. Figure 4 illustrates with broken lines a crank folded to the rest position wherein the handle 30 is turned by 180 degrees. Then the arm is horizontal and the handle 30 is positioned at the rear edge of the cover 16. Correspondingly, Figure 2 illustrates with broken lines handles 30 folded downwards by 90 degrees. In the embodiments proposed, the arm is made of nested square pipes. By manufacturing the arm from a round pipe, handle folding is easy to implement with a spiral conductor, for example. Thus, by varying the arm length, the handle turns from the rest position to the operating position.

In a third embodiment according to Figure 6, the drive shaft 22 is fitted with an operating pedal 24, which extends outside of the bin shelter. When the cover 16 is closed, the movement of the operating pedal 24 is transmitted to the drive shaft 22. However, it is possible to open the cover. Thanks to the operating pedal, the user can utilise their own mass. On the other hand, additional weight caused to the cover by the crank is avoided. An operating pedal can exist in both ends of the drive shaft.

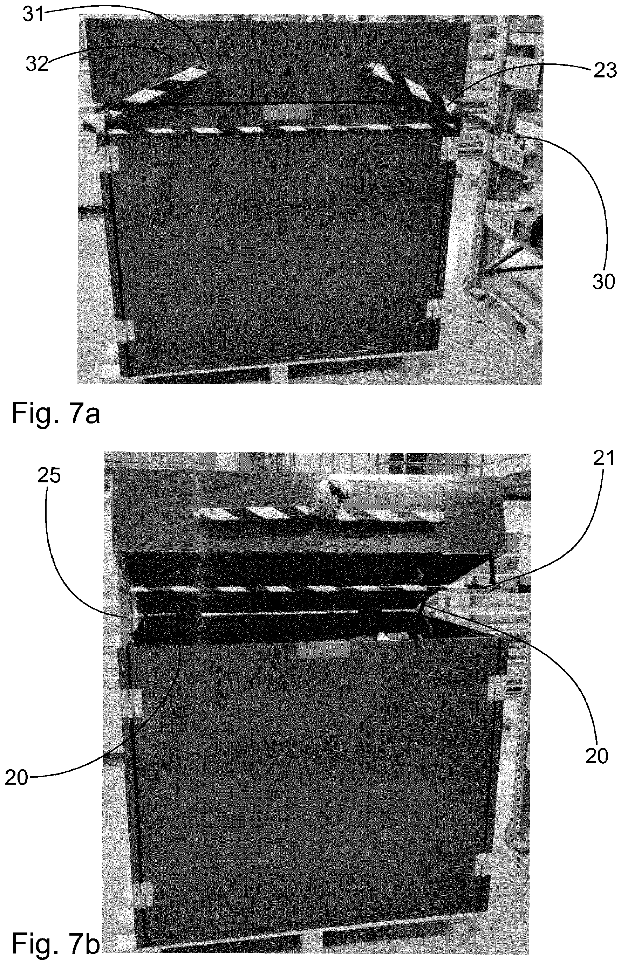

In Figure 7a, the doors composing the front wall are closed and so is the cover. The cranks 23 are here locked in the compaction position. In other words, the compactor is at least partly in the work movement keeping waste compacted. For the locking, the cover has peripheral openings 32, to which the locking pin 31 located at the crank end is fitted. The crank has a handle at the end, which can be used to operate the crank even with both hands. Advantageously, the handle can be folded against the front wall thus making the bin shelter almost free of protruding parts.

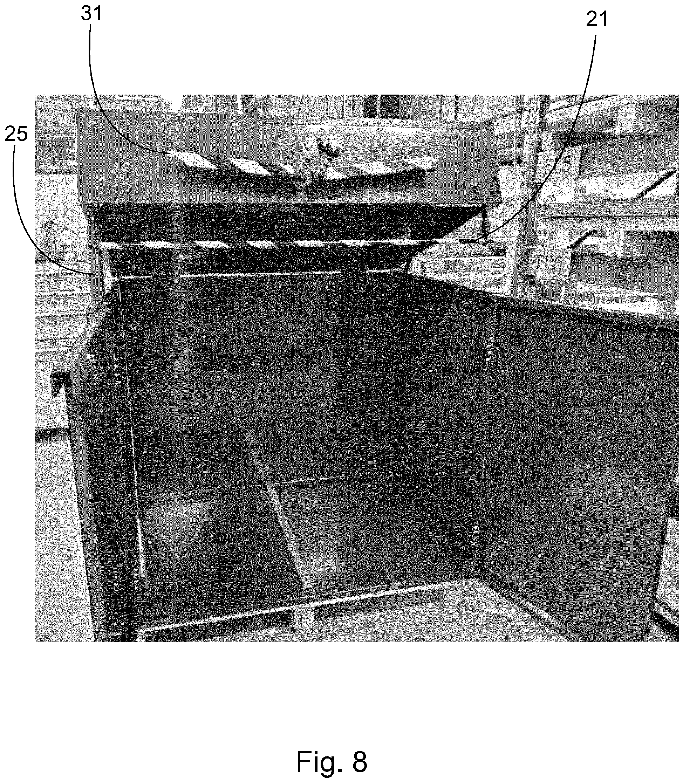

In Figure 7b, the cranks are released and folded against each other. The compactors are then in the top position under the cover. The cover is opened by pulling the locking device 21, after which the cover can be lifted assisted by the gas springs 20. It is now possible to put more waste to the waste bins. The cover also has a catch 25, which prevents unintentional closing of the cover. Here the catch is pivoted to the side wall by its lower end, but it can also be pivoted to the cover, in which case the catch activates by gravity. A joint equipped with a lock can also be used. In Figure 8, the doors forming the front wall are open and waste bins have been taken away for emptying.

In the embodiments proposed, a tubular frame has first been assembled, to which a bottom and walls have been attached. The cover is also provided with a tubular perimeter of its own, which is partly stiffened by the compactors. A metal sheet is on top also in the cover. The bin shelter is preferably made of metal, thus limiting a potential fire in the waste bin. Additional insulation is used, if necessary.

Compactors can improve the degree of filling of waste bins. The cover of the waste bin is open inside the bin shelter, but the cover of the bin shelter prevents water and snow from getting into the waste bin. On the other hand, the cover prevents access of vermin, such as rodents and birds, to the bin shelter. It is possible to place in the bin shelter, for example, two 240-litre waste bins or one 660-litre waste bin (Figure 4). When additional waste bins are needed, a larger bin shelter is selected or two or more bin shelters are arranged side by side. Therefore, it is advantageous that cranks are on the front side of the cover or an operating pedal is used so that adjacent bin shelters can be placed tightly against each other to form a single entity.

## Claims

1. Bin shelter, which is meant for one or more waste bins (10) and includes a bottom (11) and side walls (12, 13) connected to the bottom (11), between which a rear wall (14) and an at least partly openable front wall (15) are arranged, and an openable cover (16), **characterised in that** the cover (16) is fitted with compaction equipment (17) for compacting waste contained in the waste bin (10).

2. Bin shelter according to Claim 1, **characterised in that** the compaction equipment (17) includes one, two or three compactors (18).

3. Bin shelter according to Claim 1 or 2, **characterised in that** each compactor (18) has a waste bin (10) of its own or there are two compactors (18) per one waste bin (10).

4. Bin shelter according to any of Claims 1 to 3, **characterised in that** the compactor (18) is a manual scissors mechanism (19).

5. Bin shelter according to any of Claims 1 to 3, **characterised in that** the compactor (18) is a driven (26) scissors mechanism (19).

6. Bin shelter according to Claim 5, **characterised in that** the drive (26) is connected to a combination of a battery (28) and a solar panel (29).

7. Bin shelter according to any of Claims 1 to 6, **characterised in that** one or more relief springs (20) are connected to the cover (22).

8. Bin shelter according to any of Claims 1 to 7, **characterised in that** the cover (16) is provided with a locking device (21).

9. Bin shelter according to any of Claims 1 to 8, **characterised in that** the compactor (18) includes a drive shaft (22), which extends in the depth direction of the bin shelter.

10. Bin shelter according to any of Claims 1 to 8, **characterised in that** the compactor (18) includes a drive shaft (22), which extends in the width direction of the bin shelter.

11. Bin shelter according to Claim 10, **characterised in that** the drive shaft (22) is shared by each compactor (18).

12. Bin shelter according to any of Claims 9 to 11, **characterised in that** an operating pedal (24) is fitted in the drive shaft (22).

13. Bin shelter according to any of Claims 9 to 11, **characterised in that**, arranged as an extension to the drive shaft (22), there is a crank (23), which is fitted on the outside of the cover (16).

14. Bin shelter according to Claim 13, **characterised in that** the crank (23) includes an arm (24), which is telescopic.

15. Bin shelter according to Claim 13 or 14, **characterised in that** the crank (23) includes a handle (30), which is arranged to turn essentially 90 or 180 degrees relative to the crank.
